# EUROPÄISCHE PATENTANMELDUNG

(11) **EP 1 508 580 A1**
(43) Veröffentlichungstag der Anmeldung: **23.02.2005**
(21) Anmeldenummer: 04103127.9
(22) Anmeldetag: 02.07.2004
(51) Int. Cl.: C08G 6/02

(54) **Keton-Aldehydharze, insbesondere Cyclohexanon-Formaldehydharze, ein Verfahren zur Herstellung und Verwendung**

(30) Priorität: 22.08.2003 DE 10338561
(71) Anmelder: Degussa AG, 40474 Düsseldorf (DE)
(72) Erfinder: Glöckner, Patrick, Dr., 40885, Ratingen (DE); Andrejewski, Werner, 46284, Dorsten (DE); Bergmann, Hans-Peter, 45772, Marl (DE); Brückner, Iris, 46284, Dorsten (DE); Denkinger, Peter, Dr., 48301, Nottuln (DE); Ewald, Michael, 45768, Marl (DE); Weber, Thomas, 44227, Dortmund (DE)

(57) **Zusammenfassung**

Die Erfindung betrifft Keton-Aldehydharze, insbesondere Cyclohexanon-Formaldehydharze mit geringem Wassergehalt und hoher thermischer Beständigkeit und Vergilbungsbeständigkeit sowie ein Verfahren zur Herstellung und Verwendung.

## Beschreibung

Die Erfindung betrifft Keton-Aldehydharze, insbesondere Cyclohexanon-Formaldehydharze mit geringem Wassergehalt und hoher thermischer Beständigkeit und Vergilbungsbeständigkeit sowie ein Verfahren zur Herstellung und Verwendung.

Es ist bekannt, dass Ketone oder Gemische aus Ketonen und Aldehyden in Gegenwart basischer Katalysatoren oder Säuren zu harzartigen Produkten umgesetzt werden können. So lassen sich aus Gemischen von Cyclohexanon und Methylcyclohexanon Harze herstellen (Ullmann Bd. 12, S. 551). Cyclohexanon und Formaldehyd reagieren zu Hartharzen, die in der Lackindustrie Verwendung finden.

Verfahren zur Herstellung derartiger Produkte sind z.B. beschrieben in US 2,540,885, US 2,540,886; DD 12433, DE 13 00 256, DE 28 31 613, DD 123481 und DE 12 56 898.

Die nach den verschiedenen Verfahren erhaltenen Harze besitzen, wie auch aus einer in DD 123481 gegebenen Übersicht hervorgeht, Erweichungspunkte bis zu 120 °C.

DD 12433 beschreibt ein Verfahren zur Herstellung grießartiger Produkte durch den Zusatz geringer Mengen Quell- und Verdickungsmittel oder oberflächenaktiver Stoffe als Dispergierhilfsmittel. Diese Additive können ganz oder teilweise in den Produkten zurückbleiben, so dass Eigenschaften wie z.B. die Wasserfestigkeit von Beschichtungen damit gefertigter Beschichtungsstoffe negativ beeinflusst werden können. Auch ist dem Fachmann bekannt, dass der Anteil an Wasser in grießartigen Produkten relativ hoch ist, da es zu Wassereinschlüssen in den Griesteilchen kommen kann.

Nach DD 123481 und DE12 56 898 können Harze mit Erweichungspunkten bis 160°C erhalten werden. Die beschriebenen Verfahren sind jedoch aufwendig und kostenintensiv.

Nach DE 28 31 613 werden Polykondensationsprodukte aus aliphatischen oder cyclischen Ketonen oder Gemischen dieser Ketone mit aliphatischen Aldehyden in Gegenwart basischer Katalysatoren unter Verwendung von 0,005 bis 10 Mol-%, bezogen auf die Gesamtmenge Keton und Aldehyd, eines Phasentransferkatalysators erhalten. Wird nach dem dort offenbarten Verfahren ein Harz mit einer Zusammensetzung, die der vorliegenden Erfindung entspricht, hergestellt, werden hohe Erweichungspunkte und damit hohe Molekulargewichte erhalten. Da die erfindungsbetreffenden Harze in der Lackindustrie u.a. eingesetzt werden, um den Lösemittelanteil zu reduzieren, sind derartig hohe Molekulargewichte besonders von Nachteil. Auch ist dem Fachmann bekannt, dass Cyclohexanon-Formaldehydharze bei zu hohem Molekulargewicht ihre breiten Löslichkeitseigenschaften einbüßen. Des weiteren ist dem Fachmann bekannt, dass Harze nach dem dort offenbarten Verfahren geringe nicht flüchtige Anteile besitzen, wodurch die Thermostabilität negativ beeinflusst werden kann und die Ausbeuten des beschriebenen Verfahrens gering sind.

DE 12 56 898, US 2,540,885 beschreiben Verfahren zur Herstellung von Kondensationsprodukten in Anwesenheit indifferenter Lösemittel. Das der vorliegenden Erfindung zugrundeliegende Verfahren kommt ohne derartige Zusätze aus, wodurch eine kostenintensive Aufarbeitung dieses Lösemittels entfällt und bei gleicher Kesselgröße mehr Edukte verwendet werden können, so dass höhere Stoffumsätze erhalten werden. Dem Fachmann ist bekannt, dass Harze nach dem in US 2,540,886 beschriebenen Verfahren in geringen Ausbeuten erhalten werden.

In DE 13 00 256 wird ein Verfahren beschrieben, um Keton-Formaldehydharze zureinigen. Werden die Bedingungen auf die erfindungsgemäßen Kondensationsprodukte aus Cyclohexanon und Formaldehyd übertragen, resultieren Harze, die insbesondere als 10 %ige Lösung in Xylol einen unlöslichen Niederschlag erhalten.

In JP 47018866 wird ein Anhydrid zu einem Harz gegeben, um ein Harz mit geringen Wassergehalt zu erhalten, welches in Polyurethananwendungen Verwendung fmden kann. Die erfmdungsgemäßen Produkte haben ohne den Zusatz von weiteren Substanzen einen geringen Wassergehalt, geeignet für Polyurethananwendungen.

In JP 46004998 werden Phenole verwendet, um die Licht- und Hitzebeständigkeit der Cyclohexanon-Formaldehydharze zu verbessern. Die nach dem erfindungsgemäßen Verfahren hergestellten Harze sind ohne derartige Zusatzstoffe stabil.

Zur Zeit sind diverse Cyclohexanon-Formaldehydharze auf dem Markt erhältlich. Die Produkte unterscheiden sich hauptsächlich in ihrem Erweichungspunkt (von 75 - 120 °C) und ihrer OH-Zahl (von 80 - 260 mg KOH/g).

Allen diesen Produkten ist ein recht hoher Wassergehalt zwischen 0,4 und 2,5 Gew.-% gemein. Der hohe Wassergehalt der üblichen Verkaufsprodukte verbietet den Einsatz in höherwertigen Beschichtungsstoffen wie z.B. 2K-Polyurethanlacken.

Ein weiterer Nachteil der üblichen Verkaufsprodukte ist, dass Lösungen dieser Harze in aromatischen Lösemitteln wie z.B. Xylol aufgrund des hohen Wassergehaltes zu Trübungen neigen. Für Anwendungen, in denen z.B. langölige Alkydharze verwendet werden, sind diese Produkte ungeeignet.

Darüber hinaus besitzen die aktuell auf dem Markt verfügbaren Harze eine relativ geringe Temperaturstabilität, so dass sie in Einbrennsystemen nur bedingt bis nicht eingesetzt werden können.

Die der Erfindung zugrundeliegende Aufgabe lag darin, die o. g. Nachteile der handelsüblichen Produkte zu eliminieren, und Harze zu finden, die einen geringen Wassergehalt, eine hohe thermische Beständigkeit und Vergilbungsbeständigkeit besitzen sowie löslich sind in alkoholischen und aromatischen Lösemitteln. Außerdem sollte der nicht flüchtige Anteil hoch sein.

Es sollte darüber hinaus ein Verfahren zur Herstellung von Keton-Aldehydharzen, insbesondere Cyclohexanon-Formaldehydharzen, gefunden werden, wobei aus wirtschaftlichen Gründen Ausbeuten über 92 % erhalten werden sollten.

Überraschender Weise konnte die Aufgabe erfüllt werden, in dem zur Harzsynthese ein Phasentransferkatalysator verwendet wird und die notwendige Menge an Aldehyd portionsweise zugegeben wird.

Gegenstand der Erfindung sind Keton-Aldehydharze mit einem Wassergehalt von weniger als 0,4 Gew.-%, erhalten durch Kondensation mindestens eines Ketons mit mindestens einem Aldehyd, in Gegenwart von
I. mindestens einer Alkaliverbindung
   und
II. mindestens einem Phasentransferkatalysator,
lösemittelfrei oder unter Verwendung eines wassermischbaren organischen Lösemittels, wie z.B. Methanol oder Ethanol, wobei die Zugabe des Aldehyds
1. durch Vorlage zu Beginn der Kondensation und
2. in mindestens einem weiteren Teilschritt nach Initiierung der Kondensation in Stufe 1. erfolgt.

Ein bevorzugter Gegenstand der Erfindung sind Keton-Aldehydharze, wobei die Stufe 2 in zwei weiteren Teilschritten ausgeführt wird.

Ganz besonders bevorzugt sind Keton-Formaldehydharze, erhalten durch Kondensation mindestens eines Ketons mit mindestens einem Aldehyd, hergestellt in Gegenwart von
I. 0,05 bis 10 Mol-% (bezogen auf das eingesetzte Keton) mindestens einer Alkaliverbindung
   und
II. 0,01 bis 15 Gew.-% (bezogen auf das eingesetzte Keton) mindestens eines Phasentransferkatalysators,
wobei
1. 2 bis 40 Mol-% des Aldehyds zu Beginn der Reaktion vorgelegt werden,
   und
2. 20 bis 98 Mol-% des Aldehyds in einem zweiten Schritt zugeführt werden,
   und
3. 0 bis 40, bevorzugt 2 bis 40 Mol-% des Aldehyds in einem dritten Schritt zugegeben werden.

Ein weiterer bevorzugter Gegenstand der Erfindung sind derartige Cyclohexanon-Formaldehydharze.

Die der Erfindung zugrundeliegenden Keton-Aldehydharze besitzen einen geringen Wassergehalt und sind daher für den Einsatz in höherwertigen Beschichtungsstoffen wie z.B. 2K-Polyurethanlacken geeignet. Außerdem sind die Harze durch das Verfahren löslich in alkoholischen und aromatischen Lösemitteln, so dass sich diese Produkte für Anwendungen, in denen z.B. langölige Alkydharze verwendet werden, eignen.

Die erfindungsgemäßen Harze neigen nur geringfügig zu Vergilbungen während thermischer Exposition. Darüber hinaus besitzen die erfindungsgemäßen Produkte einen hohen nichtflüchtigen Anteil und sind damit für low-VOC-Anwendungen geeignet.

Es hat sich zusätzlich überraschenderweise gezeigt, dass es möglich ist, die Hydroxylzahlen der Harze in weiten Bereichen zu variieren.

Die Ausbeuten des erfindungszugrundeliegenden Verfahrens liegen über 92 %, bevorzugt über 94 % und besonders bevorzugt über 96 % der theoretischen Ausbeute.

Die erfindungsgemäßen Harze weisen die folgenden Eigenschaften auf:
- löslich in Alkoholen, insbesondere Ethanol und / oder Aromaten, insbesondere Xylol;
- einen Wassergehalt unter 0,4 Gew.-%, insbesondere unter 0,3 Gew.-%;
- eine hohe Temperaturbeständigkeit, d. h. geringe Vergilbungsneigung während thermischer Belastung;
- einen Anteil nichtflüchtiger Bestandteile von über 99 Gew.-% (1 h 160 °C);
- eine Glasübergangstemperatur zwischen 10 und 110 °C, bevorzugt zwischen 50 und 90 °C, besonders bevorzugt zwischen 60 und 85 °C;
- eine Hydroxylzahl zwischen 0 und 300 mg KOH/g.

### Ketone:

Für die erfindungsgemäßen Keton-Aldehydharze eignen sich alle Ketone insbesondere Aceton, Acetophenon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon, Cyclohexanon und alle alkylsubstituierten Cyclohexanone mit einem oder mehreren Alkylresten, die insgesamt 1 bis 8 Kohlenstoffatome aufweisen, einzeln oder in Mischung. Als Beispiele alkylsubstituierter Cyclohexanone können 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon genannt werden. Im allgemeinen können aber alle in der Literatur für Ketonharzsynthesen als geeignet genannten Ketone eingesetzt werden. Bevorzugt sind Keton-Formaldehydharze auf Basis von Cyclohexanon allein oder mit Acetophenon, 4-tert.-Butylcyclohexanon und 3,3,5-Trimethylcyclohexanon, Methylethylketon und Heptanon.

### Aldehyde:

Als Aldehyd-Komponente eignen sich prinzipiell unverzeigte oder verzweigte Aldehyde, wie z.B. Formaldehyd, Acetaldehyd, n-Butyraldehyd und / oder iso-Butyraldehyd, Valerianaldehyd sowie Dodecanal usw., bevorzugt wird jedoch Formaldehyd allein oder in Mischungen. Im allgemeinen können aber alle in der Literatur für Ketonharzsynthesen als geeignet genannten Aldehyde eingesetzt werden.

Das bevorzugte Formaldehyd wird üblicherweise als ca. 20 bis 40 Gew.-%ige wässrige oder alkoholische Lösung (z.B. in Methanol oder Butanol) eingesetzt. Andere Einsatzformen des Formaldehyds wie z.B. auch die Verwendung als para-Formaldehyd oder Trioxan sind ebenfalls möglich. Aromatische Aldehyde, wie z. B. Benzaldehyd, können in Mischung mit Formaldehyd ebenfalls enthalten sein.

### Alkaliverbindung:

Die Reaktion wird in einem basischen Milieu durchgeführt. Im allgemeinen können alle in der Literatur für Ketonharzsynthesen als geeignet genannten Alkaliverbindungen eingesetzt werden. Bevorzugt sind Metallhydroxide wie z.B. Hydroxide der Kationen NH₄, NR₄, Li, Na, K.

### Phasentransferkatalysator:

In der Polykondensationsmischung werden 0,01 bis 15 Gew-% - bezogen auf das Keton - eines Phasentransferkatalysators der allgemeinen Formel (A) 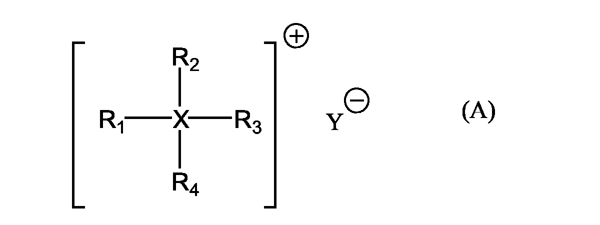 eingesetzt, wobei
- X: ein Stickstoff- oder Phosphoratom,
- R₁, R₂, R₃, R₄: gleich oder verschieden sein können und einen Alkylrest mit 1 bis 22 C-Atomen in der Kohlenstoffkette und / oder einen Phenyl- und / oder einen Benzylrest
und
- Y: das Anion einer (an)organischen Säure oder ein Hydroxidion
bedeuten.

Für den Fall quatemärer Ammoniumsalze sind Alkylreste (R₁₋₄) mit 1 bis 22 C-Atomen, insbesondere solche mit 1 bis 12 C-Atomen, in der Kohlenstoffkette und / oder Phenyl- und /oder Benzylresten und / oder Mischungen aus beiden bevorzugt. Vorzugsweise wird Benzyltributylammoniumchlorid, Cetyldimethylbenzylammoniumchlorid und / oder Triethylbenzylammoniumchlorid eingesetzt. Für quaternäre Phosphoniumsalze sind für R₁₋₄ Alkylreste mit 1 bis 22 C-Atomen und / oder Phenylreste und / oder Benzylreste bevorzugt. Als Anionen kommen solche starker (an)organischer Säuren wie z. B. Cl⁻, Br⁻, J⁻ aber auch Hydroxide, Methoxide oder Acetate in Frage.

Beispiele quaternärer Ammoniumsalze sind Cetyldimethylbenzylammoniumchlorid, Tributylbenzylammoniumchlorid, Trimethylbenzylammoniumchlorid, Trimethylbenzylammoniumjodid, Triethylbenzylammoniumchlorid oder Triethylbenzylammoniumjodid, Tetramethylammoniumchlorid, Tetraethylammoniumchlorid, Tetrabuthylammoniumchlorid. Als quaternäre Phosphoniumsalze kommen z.B. Triphenylbenzylphosphoniumchlorid oder Triphenylbenzylphosphoniumjodid in Frage. Es können allerdings auch Mischungen eingesetzt werden.

Der Phasentransferkatalysator wird in Mengen von 0,01 bis 15, vorzugsweise von 0,1 bis 10,0, und insbesondere in Mengen von 0,1 bis 5,0 Gew.-% - bezogen auf das eingesetzte Keton - in der Polykondensationsmischung eingesetzt.

### Lösemittel:

Die Reaktion kann unter Verwendung eines Hilfslösemittels durchgeführt werden. Als geeignet haben sich Alkohole wie z.B. Methanol oder Ethanol erwiesen. Es ist auch möglich, als Hilfslösemittel wasserlösliche Ketone einzusetzen, die dann in das Harz mit einreagieren.

Gegenstand der Erfindung ist auch ein Verfahren zur Herstellung von Keton-Aldehydharzen mit einem Wassergehalt von weniger als 0,4 Gew.-%, erhalten durch Kondensation mindestens eines Ketons mit mindestens einem Aldehyd, in Gegenwart von
I. mindestens einer Alkaliverbindung
   und
II. mindestens einem Phasentransferkatalysator,
lösemittelfrei oder unter Verwendung eines wassermischbaren organischen Lösemittels wie z.B. Methanol oder Ethanol , wobei die Zugabe des Aldehyds
1. durch Vorlage zu Beginn der Kondensation und
2. in mindestens einem weiteren Teilschritt nach Initiierung der Kondensation in Stufe 1. erfolgt.

Ein bevorzugter Gegenstand der Erfmdung ist ein Verfahren, wobei die Stufe 2 in zwei weiteren Teilschritten ausgeführt wird.

Ganz besonders bevorzugt ist ein Verfahren zur Herstellung von Keton-Formaldehydharze n, erhalten durch Kondensation mindestens eines Ketons mit mindestens einem Aldehyd, hergestellt in Gegenwart von
I. 0,05 bis 10 Mol-% (bezogen auf das eingesetzte Keton) mindestens einer Alkaliverbindung
   und
II. 0,01 bis 15 Gew.-% (bezogen auf das eingesetzte Keton) mindestens eines Phasentransferkatalysators,
wobei
1. 2 bis 40 Mol-% des Aldehyds zu Beginn der Reaktion vorgelegt werden,
   und
2. 20 bis 98 Mol-% des Aldehyds in einem zweiten Schritt zugefährt werden,
   und
3. 0 bis 40, bevorzugt 2 bis 40 Mol-% des Aldehyds in einem dritten Schritt zugegeben werden.

Ein weiterer bevorzugter Gegenstand der Erfindung ist ein Verfahren zur Herstellung von Cyclohexanon-Formaldehydharzen.

Das Verhältnis zwischen der Ketonkomponente und der Aldehydkomponente kann variieren zwischen 1 zu 0,9 bis 1 zu 4. Bevorzugt wird jedoch ein Keton / Aldehydverhältnis von 1 zu 1 bis 1 zu 2,5. Die Ketonkomponente und die Aldehydkomponente können in reiner Form oder in Lösemitteln, wie oben genannt, oder wässrig, zugegeben werden. Besonders bevorzugt ist, dass eine wässrige oder alkoholische Formaldehydlösung, Trioxan und / oder Paraformaldehyd eingesetzt wird.
Ebenfalls Gegenstand der Erfmdung ist die Verwendung von Keton-Aldehydharzen mit einem Wassergehalt von weniger als 0,4 Gew.-%, erhalten durch Kondensation in Gegenwart von
I. mindestens einer Alkaliverbindung
   und
II. mindestens einem Phasentransferkatalysator,
lösemittelfrei oder unter Verwendung eines wassermischbaren organischen Lösemittels wie z.B. Methanol oder Ethanol, wobei die Zugabe des Aldehyds
1. durch Vorlage zu Beginn der Kondensation und
2. in mindestens einem weiteren Teilschritt nach Initiierung der Kondensation in Stufe 1. erfolgt, als Hauptkomponente, Basiskomponente oder Zusatzkomponente in Überzugsmitteln, Druckfarben, Pigment- und Abtönpasten, Masterbatches, Kugelschreiberpasten, Tinten, Polituren, Klebstoffen sowie Dicht- und Dämmstoffen, die physikalisch oder oxidativ trocknen aber insbesondere mit Isocyanaten und Isocyanatderivaten und / oder mit Aminharzen als Vernetzer.

Die Erfindung wird durch das folgende Beispiel erläutert.

### Beispiel:

### Beispiel zur Herstellung eines Harzes

Die Synthese der Harze erfolgt, indem 1030 g Cyclohexanon, 210 g einer ca. 30 %igen Formaldehydlösung, 280 ml Methanol und 3,8 g Benzyltributylammoniumchlorid in einem Dreihalskolben mit Rührer, Rückflusskühler und Thermofühler in Stickstoffatmosphäre vorgelegt werden. Die Reaktion wird durch die Zugabe von 8,7 g einer 25 %igen Natronlaugelösung eingeleitet. Durch Kühlung wird die Temperatur des Ansatzes unter 60 °C gehalten. Sodann werden innerhalb von 100 min 1350 g einer ca. 30 %igen Formaldehydlösung und dann 25,2 g einer 25 %igen Natronlaugelösung zugegeben. Nach Rühren unter Rückfluss werden 100 g einer ca. 30 %igen Formaldehydlösung zugesetzt, und es wird weitere 4 h unter Rückfluss gerührt. Dann wird der Rührer abgeschaltet. Nach Separation der Phasen, wird die überstehende wässrige Methanolphase abgetrennt und das verbleibende Wasser / Methanol-Gemisch abdestilliert. Das Rohprodukt wird fünfmal mit Wasser gewaschen, wobei dem ersten Waschwasser 12 ml Essigsäure zugesetzt werden. Abschließend wird bis 165 °C im Wasserstrahlvakuum destilliert.

### Eigenschaften:

Es wird ein helles, klares und sprödes Harz erhalten, das 10 %ig löslich ist in Ethanol, Methylethylketon, Aceton, Ethylacetat und Xylol und einen Erweichungspunkt von 106°C besitzt.
Farbzahl nach Gardner, 50 %ig in Ethylacetat: 0,5
Farbzahl nach Hazen, 50 %ig in Ethylacetat: 110
Wassergehalt nach Karl-Fischer: 0,14 Gew.-%
OHZ = 96 mg KOH/g, T_{g} = 71°C
Mₙ = 650 g/mol M_{w} = 1 200 g/mol (gegen Polystyrol als Standard)

| | 1 h bei 120 °C | 1 h bei 140 °C | 1 h bei 160 °C |
|---|---|---|---|
| Farbzahlen¹⁾ | 0,6 | 0,8 | 1,6 |
| Nichtflüchtiger Anteil [Gew.-%] | 99,8 | 99,6 | 99,5 |

| | | | |
|---|---|---|---|
| ¹⁾ Farbzahlen nach Gardner, 50 %ig in Ethylacetat der thermisch belasteten 100 %igen Harze | | | |

## Patentansprüche

1. Keton-Aldehydharze mit einem Wassergehalt von weniger als 0,4 Gew.-%, erhalten durch Kondensation mindestens eines Ketons mit mindestens einem Aldehyd, in Gegenwart von
I. mindestens einer Alkaliverbindung,
und
II. mindestens einem Phasentransferkatalysator,
lösemittelfrei oder unter Verwendung eines wassermischbaren organischen Lösemittels, wobei die Zugabe des Aldehyds
1. durch Vorlage zu Beginn der Kondensation und
2. in mindestens einem weiteren Teilschritt nach Initiierung der Kondensation in Stufe 1 erfolgt.

2. Keton-Aldehydharze nach Anspruch 1,
**dadurch gekennzeichnet,**
**dass** die Stufe 2 in zwei Teilschritten ausgeführt wird.

3. Keton-Formaldehydharze nach Anspruch 1 oder 2, hergestellt in Gegenwart von
I. 0,05 bis 10 Mol-% (bezogen auf das eingesetzte Keton) mindestens einer Alkaliverbindung
und
II. 0,01 bis 15 Gew.-% (bezogen auf das eingesetzte Keton) mindestens eines Phasentransferkatalysators,
wobei
1. 2 bis 40 Mol-% des Aldehyds zu Beginn der Reaktion vorgelegt werden,
und
2. 20 bis 98 Mol-% des Aldehyds in einem zweiten Schritt zugeführt werden,
und
3. 0 bis 40, bevorzugt 2 bis 40 Mol-% des Aldehyds in einem dritten Schritt zugegeben werden.

4. Keton-Aldehydharze nach mindestens einem der vorhergehenden Ansprüche,
**dadurch gekennzeichnet,**
**dass** Ketone, ausgewählt aus
Aceton, Acetophenon, Methylethylketon, Heptanon-2, Pentanon-3, Methylisobutylketon, Cyclohexanon, Cyclopentanon, Cyclododecanon, Mischungen aus 2,2,4- und 2,4,4-Trimethylcyclopentanon, Cycloheptanon und Cyclooctanon, Cyclohexanon und / oder alkylsubstituierte Cyclohexanone mit einem oder mehreren Alkylresten, die insgesamt 1 bis 8 Kohlenstoffatome aufweisen, einzeln oder in Mischung, enthalten sind.

5. Keton-Aldehydharze nach Anspruch 4,
**dadurch gekennzeichnet,**
**dass** als alkylsubstituierte Cyclohexanone 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon enthalten sind.

6. Keton-Aldehydharze nach mindestens einem der vorhergehenden Ansprüche,
**dadurch gekennzeichnet,**
**dass** Cyclohexanon allein oder in Mischungen enthalten ist.

7. Keton-Aldehydharze nach mindestens einem der vorhergehenden Ansprüche,
**dadurch gekennzeichnet,**
**dass** Aldehyde ausgewählt aus
Formaldehyd, Acetaldehyd, n-Butyraldehyd, iso-Butyraldehyd, Valerianaldehyd und / oder Dodecanal enthalten sind.

8. Keton-Aldehydharze nach mindestens einem der vorhergehenden Ansprüche,
**dadurch gekennzeichnet,**
**dass** eine wässrige oder alkoholische Formaldehydlösung, Trioxan und / oder Paraformaldehyd eingesetzt wird.

9. Keton-Aldehydharze nach mindestens einem der vorhergehenden Ansprüche,
**dadurch gekennzeichnet,**
**dass** als Alkaliverbindungen Hydroxide der Kationen NH₄, NR₄, Li, Na, K eingesetzt werden.

10. Keton-Aldehydharze nach mindestens einem der vorhergehenden Ansprüche,
**dadurch gekennzeichnet,**
**dass** Kalium- und / oder Natriumhydroxid eingesetzt wird.

11. Keton-Aldehydharze nach mindestens einem der vorhergehenden Ansprüche,
**dadurch gekennzeichnet,**
**dass** als Komponente II Ammonium- und / oder Phosphoniumverbindungen eingesetzt werden.

12. Keton-Aldehydharze nach Anspruch 11,
**dadurch gekennzeichnet,**
**dass** Verbindungen der allgemeinen Formel (A) 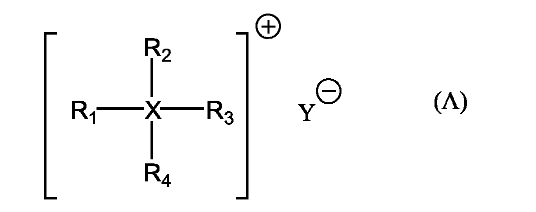 eingesetzt werden, wobei
X ein Stickstoff- oder Phosphoratom,
R₁, R₂, R₃, R₄ gleich oder verschieden sein können und einen Alkylrest mit 1 bis 22 C-Atomen in der Kohlenstoffkette und / oder einen Phenyl- und / oder einen Benzylrest
und
Y das Anion einer (an)organischen Säure oder ein Hydroxidion
bedeuten.

13. Keton-Aldehydharze nach Anspruch 12,
**dadurch gekennzeichnet,**
**dass** quaternäre Ammoniumsalze mit Alkylresten (R₁₋₄) mit 1 bis 22 C-Atomen, insbesondere solche mit 1 bis 12 C-Atomen, in der Kohlenstoffkette und / oder Phenylund / oder Benzylresten allein oder in Mischungen eingesetzt werden.

14. Keton-Aldehydharze nach Anspuch 12,
**dadurch gekennzeichnet,**
**dass** quaternäre Phosphoniumsalze mit Alkylresten (R₁₋₄) mit 1 bis 22 C-Atomen und /oder Phenylreste und / oder Benzylreste eingesetzt werden.

15. Keton-Aldehydharze nach einem der Ansprüche 11 bis 14,
**dadurch gekennzeichnet,**
**dass** als Anionen Cl⁻, Br⁻, J⁻, Hydroxide, Methoxide oder Acetate enthalten sind.

16. Keton-Aldehydharze nach einem der vorherigen Ansprüche,
**dadurch gekennzeichnet,**
**dass** Cetyldimethylbenzylammoniumchlorid, Tributylbenzylammoniumchlorid, Trimethylbenzylammoniumchlorid, Trimethylbenzylammoniumjodid, Triethylbenzylammoniumchlorid, Triethylbenzylammoniumjodid, Tetramethylammoniumchlorid, Tetraethylammoniumchlorid, Tetrabuthylammoniumchlorid eingesetzt werden.

17. Keton-Aldehydharze nach mindestens einem der vorhergehenden Ansprüche,
**dadurch gekennzeichnet,**
**dass** als wassermischbare Lösemittel Alkohole und / oder Ketone eingesetzt werden.

18. Keton-Aldehydharze nach Anspruch 17,
**dadurch gekennzeichnet,**
**dass** Methanol, Ethanol, Ethylmethylketon und / oder Aceton eingesetzt wird.

19. Keton-Aldehydharze nach mindestens einem der vorhergehenden Ansprüche,
**dadurch gekennzeichnet,**
**dass** Cyclohexanon und Formaldehyd enthalten sind.

20. Keton-Aldehydharze nach mindestens einem der vorhergehenden Ansprüche,
**dadurch gekennzeichnet, dass** diese
- löslich sind in Alkoholen, insbesondere Ethanol, und / oder Aromaten, insbesondere Xylol;
- einen Wassergehalt unter 0,4 Gew.-%, insbesondere unter 0,3 Gew.-%;
- eine hohe Temperaturbeständigkeit, d. h. geringe Vergilbungsneigung während thermischer Belastung;
- einen Anteil nichtflüchtiger Bestandteile von über 99 Gew.-% (1 h 160 °C);
- eine Glasübergangstemperatur zwischen 10 und 110 °C, bevorzugt zwischen 50 und 90 °C, besonders bevorzugt zwischen 60 und 85 °C;
- eine Hydroxylzahl zwischen 0 und 300 mg KOH/g;
aufweisen.

21. Verfahren zur Herstellung von Keton-Aldehydharzen mit einem Wassergehalt von weniger als 0,4 Gew.-%, erhalten durch Kondensation mindestens eines Ketons mit mindestens einem Aldehyd, in Gegenwart von
I. mindestens einer Alkaliverbindung,
und
II. mindestens einem Phasentransferkatalysator,
lösemittelfrei oder unter Verwendung eines wassermischbaren organischen Lösemittels,
wobei die Zugabe des Aldehyds
1. durch Vorlage zu Beginn der Kondensation und
2. in mindestens einem weiteren Teilschritt nach Initiierung der Kondensation in Stufe 1. erfolgt.

22. Verfahren nach Anspruch 21,
**dadurch gekennzeichnet,**
**dass** Verbindungen der allgemeinen Formel (A) 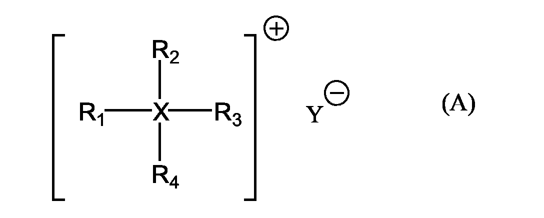 eingesetzt werden, wobei
X ein Stickstoff- oder Phosphoratom,
R₁, R₂, R₃, R₄ gleich oder verschieden sein können und einen Alkylrest mit 1 bis 22 C-Atomen in der Kohlenstoffkette und / oder einen Phenyl- und / oder einen Benzylrest
und
Y das Anion einer (an)organischen Säure oder ein Hydroxidion
bedeuten.

23. Verfahren nach Anspruch 21 oder 22,
hergestellt in Gegenwart von
I. 0,05 bis 10 Mol-% (bezogen auf das eingesetzte Keton) mindestens einer Alkaliverbindung
und
II. 0,01 bis 15 Gew.-% (bezogen auf das eingesetzte Keton) mindestens eines Phasentransferkatalysators,
wobei
1. 2 bis 40 Mol-% des Aldehyds zu Beginn der Reaktion vorgelegt werden,
und
2. 20 bis 98 Mol-% des Aldehyds in einem zweiten Schritt zugeführt werden, und
3. 0 bis 40, bevorzugt, 2 bis 40 Mol-% des Aldehyds in einem dritten Schritt zugegeben werden.

24. Verwendung von Keton-Aldehydharzen mit einem Wassergehalt von weniger als 0,4 Gew.-%, erhalten durch Kondensation mindestens eines Ketons mit mindestens einem Aldehyd, in Gegenwart von
I. mindestens einer Alkaliverbindung,
und
II. mindestens einem Phasentransferkatalysator, lösemittelfrei oder unter Verwendung eines wassermischbaren organischen Lösemittels,
wobei die Zugabe des Aldehyds
1. durch Vorlage zu Beginn der Kondensation und
2. in mindestens einem weiteren Teilschritt nach Initiierung der Kondensation in Stufe 1. erfolgt, als Hauptkomponente, Basiskomponente oder Zusatzkomponente in Überzugsmitteln, Druckfarben, Pigment- und Abtönpasten, Masterbatches, Kugelschreiberpasten, Tinten, Polituren, Klebstoffen sowie Dicht- und Dämmstoffen.

25. Verwendung nach Anspruch 24 als Hauptkomponente, Basiskomponente oder Zusatzkomponente in Überzugsmitteln, Druckfarben, Pigment- und Abtönpasten, Masterbatches, Kugelschreiberpasten, Tinten, Polituren, Klebstoffen sowie Dicht- und Dämmstoffen , die physikalisch oder oxidativ trocknen.

26. Verwendung nach Anspruch 24 als Hauptkomponente, Basiskomponente oder Zusatzkomponente in Überzugsmitteln, Druckfarben, Pigment- und Abtönpasten, Masterbatches, Kugelschreiberpasten, Tinten, Polituren, Klebstoffen sowie Dicht- und Dämmstoffen mit Isocyanaten und Isocyanatderivaten als Vernetzer.

27. Verwendung nach Anspruch 24 als Hauptkomponente, Basiskomponente oder Zusatzkomponente in Überzugsmitteln, Druckfarben, Pigment- und Abtönpasten, Masterbatches, Kugelschreiberpasten, Tinten, Polituren, Klebstoffen sowie Dicht- und Dämmstoffen mit Aminharzen als Vernetzer.
